# EUROPEAN PATENT APPLICATION

(11) **EP 2 805 844 A2**
(43) Date of publication of application: **26.11.2014**
(21) Application number: 14168132.0
(22) Date of filing: 13.05.2014
(51) Int. Cl.: B60K 37/02, B60K 37/06

(54) **Trip reset button for a vehicle instrument cluster**

(30) Priority: 22.05.2013 US 201313899702
(71) Applicant: Delphi Technologies, Inc., Troy MI 48007 (US)
(72) Inventor: Blackmer, Stephen, C., Millington, MI Michigan 48746 (US); Liburdi, Steven, A., Grosse Pointe Farms, MI Michigan 48236 (US)
(74) Representative: Robert, Vincent

(57) **Abstract**

An instrument panel (12) for a vehicle that includes a housing (20), a microphone (26) and an actuator (22). The microphone (26) is configured to detect a characteristic sound in the housing (20). The actuator (22) is coupled to the housing (20), and the actuator (22) is configured to emit the characteristic sound into the housing (20) when actuated.

## Description

### TECHNICAL FIELD OF INVENTION

This disclosure generally relates to acoustic based control input, and more particularly relates to a trip reset button for a vehicle instrument cluster.

### BACKGROUND OF INVENTION

Some vehicle instrument clusters convey information entirely by way of a liquid crystal displays (LCD). The LCD covers the entire viewing area of an instrument cluster pocket of a dashboard assembly. Adding a conventionally located trip/reset button has been a challenge in such instrument clusters. LCD manufactures either do not offer LCD panels with small holes in them for passing through a stem of the conventionally located trip/reset button, or charge a very high cost due to high fallout rates in the LCD production process. As a work-around, auto makers resort to adding the trip/reset button function to other areas of the vehicle, on the steering wheel for example, which is undesirable costly, and so locates the trip/reset button in a place not conventionally expected by the automobile customer.

### SUMMARY OF THE INVENTION

In accordance with one embodiment, an instrument panel for a vehicle is provided. The instrument panel includes a housing, a microphone, and an actuator. The microphone is configured to detect a characteristic sound in the housing. The actuator is coupled to the housing. The actuator is also configured to emit the characteristic sound into the housing when actuated. The actuator may be designated to be a trip-meter reset button. The housing may define a lens portion, and the actuator is located on the lens portion. The actuator may include a snap dome. The actuator may further include a stem configured to actuate the snap dome when the stem is pressed. The microphone may include a pressure sensor configured to detect the characteristic sound. The actuator may be configured to emit a first sound when the actuator is pressed, and emit a second sound distinct from the first sound when the actuator is released.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a vehicle interior equipped with an instrument panel that includes a needle pointer assembly in accordance with one embodiment;
Fig. 2 is a perspective view of the instrument panel of Fig. 1 in accordance with one embodiment;
Fig. 3 is an exploded perspective view of the instrument panel of Fig. 1 in accordance with one embodiment;
Fig. 4 is a sectional side view of the instrument panel of Fig. 1 in accordance with one embodiment; and
Fig. 5 is a sectional side view of the instrument panel of Fig. 1 in accordance with one embodiment.

### DETAILED DESCRIPTION

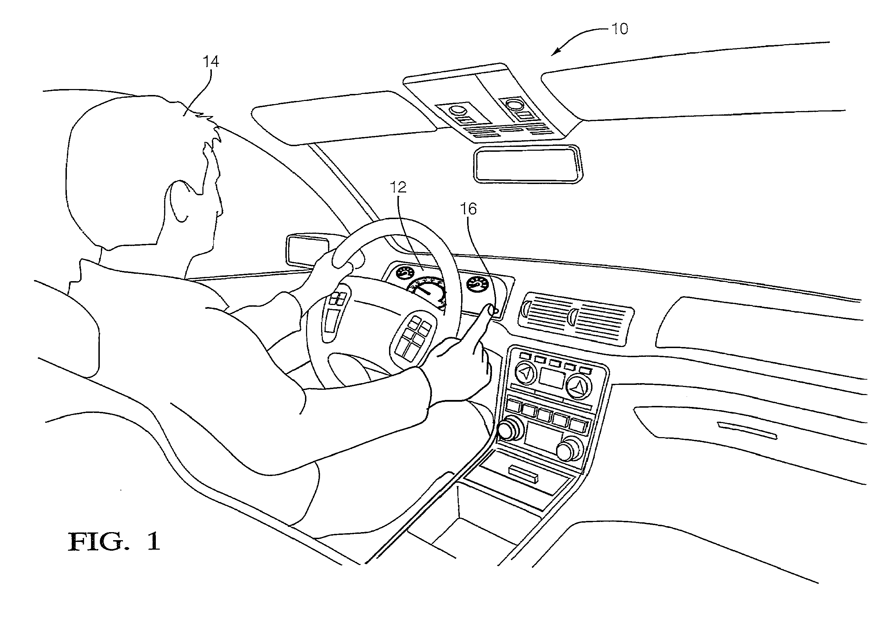

Fig. 1 illustrates a non-limiting example of a vehicle 10 equipped with an instrument panel 12 installed into a dashboard 16 of the vehicle 10. In general, the instrument panel 12 displays information to an operator 14 of the vehicle 10 such as vehicle speed, engine coolant temperature, and the like.

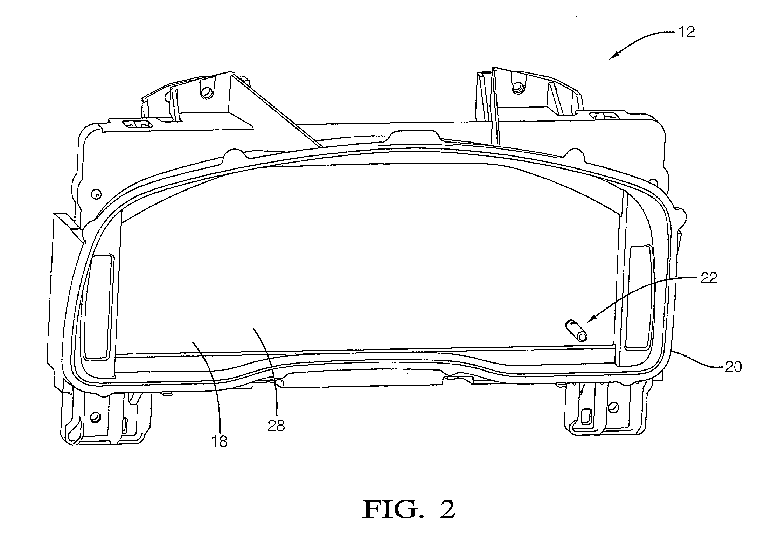

Fig. 2 illustrates a non-limiting example of the instrument panel 12 as it might appear when not installed into the dashboard 16 of the vehicle 10. In general, the instrument panel 12 includes a reconfigurable display, hereafter the display 18. In this example the display 18 spans most of the viewing area of the instrument panel 12. As used herein, a reconfigurable display includes, but is not limited to, any device that can display images in a manner similar to a display screen on a personal computer. For example, the display 18 may include arrays of light emitting diodes (i.e. an LED display) or liquid crystal devices (i.e. an LCD display). Alternatively, the display 18 may be an applique that defines various symbols which become visibly apparent to the operator 14 when suitably backlit. It is recognized that an applique would not be as versatile for displaying a wide variety of information, but is believed to be a lower cost alternative to a fully reconfigurable display.

The instrument panel 12 generally includes a housing 20 that may include features to aid attaching the instrument panel 12 to the dashboard 16 of the vehicle 10, as will be recognized by those skilled in the art. The instrument panel 12 also includes an actuator 22 shown at a location typically associated with a trip/reset button of the instrument panel 12. As will become apparent in the description that follows, the actuator 22 is distinct from prior art examples of a trip/reset button in that it does not include a shaft extending through the display 18, as is the common practice for many known instrument panels. Furthermore, the actuator 22 does not rely on wires or other means of conducting an electrical signal from the actuator 22 to indicate to other circuitry in the instrument panel 12 that the actuator 22 is being actuated. Indeed, as will become apparent, the actuator 22 appears to hover over the display 18 without any obvious means for the actuation of the actuator 22 to communicate with other circuitry in the instrument panel 12.

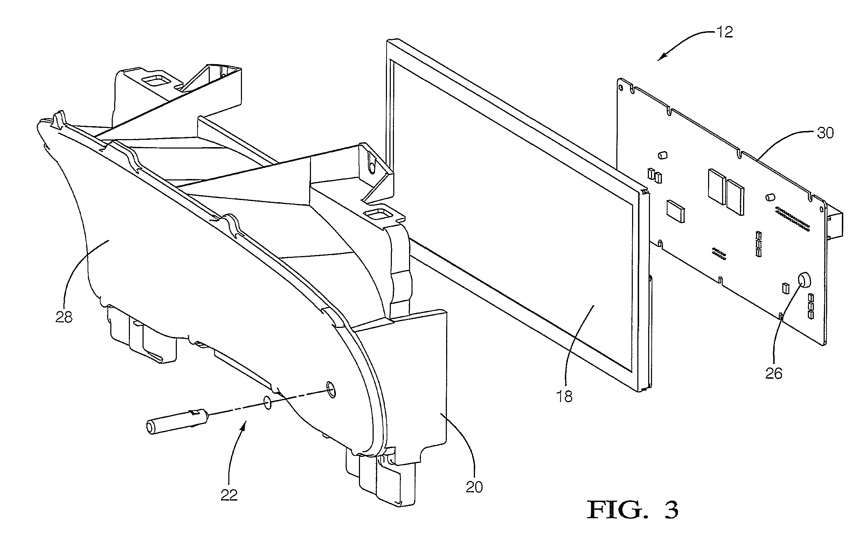

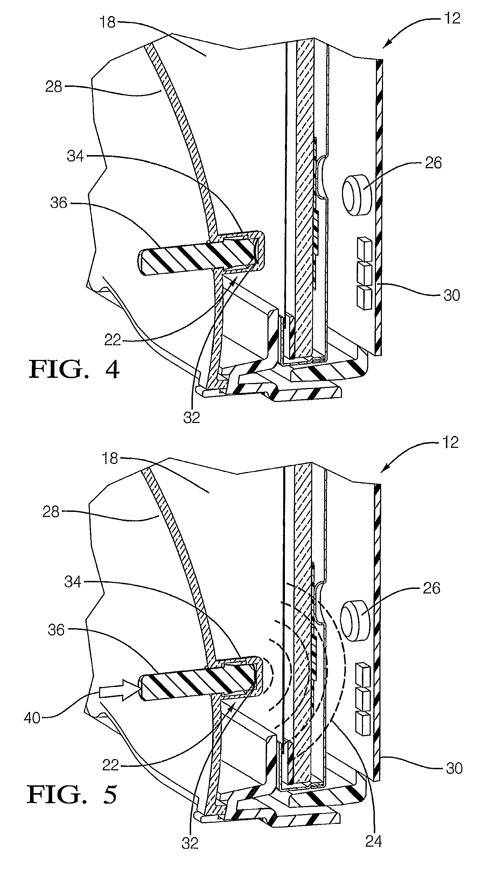

To achieve this effect, the actuator 22 is generally configured to emit a characteristic sound 24 (Fig. 5) into the housing 20 when the actuator 22 is actuated. Accordingly, the actuator 22 is generally coupled or attached or mounted to the housing 20 in a manner effective for the characteristic sound to be coupled to the housing 20. Preferably, the actuator 22 is located on a lens portion 28 of the housing 20. It should be understood that the lens portion 28 would be formed of a clear material such as a clear polymeric compound, and so the mystery effect of how the actuator 22 communicates with, for example, a circuit board 30 of the instrument panel 12 (Fig. 3).

Fig. 3 is an exploded view of Fig. 2 that further illustrates non-limiting features of the instrument panel 12. In order to detect the characteristic sound, the instrument panel 12 may be equipped with a microphone 26 configured to detect the characteristic sound 24 in the housing 20. As used herein, the term microphone is used to designate any device capable of detecting sound waves or corresponding changes in pressure caused by the actuator 22 emitting the characteristic sound. As such, the microphone may use, but is not limited to, use electromagnetic induction (dynamic microphone), capacitance change (condenser microphone), piezoelectric generation, or light modulation to produce an electrical voltage signal from mechanical vibration. Alternatively, the microphone 26 may be pneumatic pressure transducer such as Honeywell 26PC01SMT pressure transducer. The microphone 26 is preferably mounted on the circuit board 30 for reasons of manufacturing ease; however other locations may be advantageous for certain housing configurations or other environmental concerns.

Figs 4 and 5 further illustrated details of the actuator 22 in relation to other features of the instrument panel 12. In one embodiment, the actuator 22 includes a snap dome 32. Snap domes are readily available from several suppliers including Snaptron Inc. of Windsor, Colorado. Incorporating the snap dome 32 as illustrated is advantageous as the snap dome 32 can be selected to produce the characteristic sound 24 when actuated while in contact with the lens portion 28. The snap dome 32 could simply be attached to the surface of the lens portion 28. However, the snap dome 32 is preferably placed into a pocket 34 molded into the lens portion 28, and actuated by a stem 36 when actuated in a direction shown by an arrow 40. Such an arrangement is considered to be advantageous as the characteristic sound 24 should be more consistent as opposed to a finger of the operator 14 making direct contact with the snap dome 32. As such, the actuator 22 includes a stem 36 configured to actuate the snap dome 32 when the stem 36 is pressed.

Other ways for an actuator to be formed on the surface of lens portion 28 are contemplated, and so the examples set forth herein are not limiting. For example, an actuator may be provided by molding a dome feature into the lens portion, where the dome feature is configured to deflect in a manner similar to the snap dome 32 when pressed by the operator 14. Furthermore, instead of pressing the stem 36, the actuator may be configured to emit the characteristic noise when the stem 36 or a knob in place of the stem 36 is rotated.

In the non-limiting example given above, the actuator 22 is generally designated to be a trip-meter reset button of the instrument panel 12. However, it is also contemplated that the teachings set forth herein regarding actuators could be applied to devices other than the instrument panel 12. For example, the actuator could be used as an ON/OFF button on a radio or other entertainment device in the vehicle 10 or other device not found in the vehicle 10. Furthermore, while only one actuator is suggested, it is contemplated that the instrument panel 12 or other device could be equipped with multiple actuators. Each actuator could be configured to emit a distinct characteristic sound. Alternatively, the instrument panel could equipped with multiple microphones, and time-of-flight measurements of signals from the multiple microphones could be used to determine which of a plurality of actuators was being actuated.

It is also recognized that when the snap dome 32 is pressed and released, the sound emitted may be distinct. As such, the actuator 22 may be configured to emit a first sound when the actuator is pressed, and emit a second sound distinct from the first sound when the actuator is released. It follows that the microphone 26, or a controller (not shown) receiving a signal from the microphone 26 may be configured to determine if the detected sound corresponds to pressing or releasing the actuator 22. Such a configuration would allow for press and hold operation of the actuator 22, and so provide more modes of operation for the actuator than simply acting as a trip/reset button. Alternatively, the pressing and releasing of the actuator may be determined by a polarity difference of the signal coming from the microphone.

The controller may include a processor such as a microprocessor or other control circuitry as should be evident to those in the art. The controller may include memory, including non-volatile memory, such as electrically erasable programmable read-only memory (EEPROM) for storing one or more routines, thresholds and captured data. The one or more routines may be executed by the processor to perform steps for determining if signals received by the controller correspond to the characteristic sound 24 as described herein. The circuit board 30 may also include additional circuitry to filter a signal from the microphone 26 in order to better detect the characteristic sound 24.

Accordingly, an actuator 22 for an instrument panel 12 of a vehicle 10 is provided. Because the actuator 22 communicates actuation with sound waves (the characteristic sound 24), there is no need for unsightly wires to be connected to the actuator 22, and the actuator 22 does not need to physically extend to or through the display 18. As such, the instrument panel 12 is more aesthetically pleasing, and provides some mastery as to how actuation of the actuator 22 is communicated to the instrument panel 12.

## Claims

1. An instrument panel (12) for a vehicle (10), said instrument panel (12) comprising:
a housing (20); and
a microphone (26) configured to detect a characteristic sound (24) in the housing (20); and
an actuator (22) coupled to the housing (20), said actuator (22) configured to emit the characteristic sound (24) into the housing (20) when actuated.

2. Instrument panel (12) in accordance with claim 1, wherein the actuator (22) is designated to be a trip-meter reset button.

3. Instrument panel (12) according to any one of the preceding claims, wherein the housing (20) defines a lens portion (28), and the actuator (22) is located on the lens portion (28).

4. Instrument panel (12) according to any one of the preceding claims, wherein the actuator (22) includes a snap dome (32).

5. Instrument panel (12) in accordance with claim 4, wherein the actuator (22) includes a stem (36) configured to actuate the snap dome (32) when the stem (36) is pressed.

6. Instrument panel (12) according to any one of the preceding claims, wherein the microphone (26) includes a pressure sensor configured to detect the characteristic sound (24).

7. Instrument panel (12) according to any one of the preceding claims, wherein the actuator (22) is configured to emit a first sound when the actuator (22) is pressed, and emit a second sound distinct from the first sound when the actuator (22) is released.
